# EUROPÄISCHE PATENTSCHRIFT

(11) **EP 1 792 779 B1**
(45) Veröffentlichungstag und Bekanntmachung des Hinweises auf die Patenterteilung: **13.08.2008**
(21) Anmeldenummer: 06024361.5
(22) Anmeldetag: 24.11.2006
(51) Int. Cl.: B60R 3/02

(54) **Vorrichtung zur Trittsensierung an einer Trittplatte eines Fahrzeuges des öffentlichen Personenverkehrs**
Apparatus for sensing the step on a footboard of a public transport vehicle
Dispositif pour capter la marche sur un marche pied d'un véhicule de transport en commun

(30) Priorität: 01.12.2005 DE 202005018843 U
(43) Veröffentlichungstag der Anmeldung: 06.06.2007
(73) Patentinhaber: Gebr. Bode GmbH & Co. KG, 34123 Kassel (DE)
(72) Erfinder: Simon, Michael, 34260 Kaufungen (DE)
(74) Vertreter: Bauer Vorberg Kayser Patentanwälte

(56) Entgegenhaltungen:
- EP-A- 1 447 273
- EP-A1- 1 470 959
- EP-A1- 1 502 817
- DE-A1- 3 242 134
- DE-A1- 3 409 257

## Beschreibung

Die Erfindung betrifft eine Vorrichtung zur Trittsensierung mit den Merkmalen aus dem Oberbegriff des Patentanspruchs 1.

Die Erfindung kann an einem Fahrzeug, insbesondere an einem Fahrzeug des öffentlichen Personenverkehrs, eingesetzt werden, welches zur Erleichterung des Einstiegs in das Fahrzeug eine ausfahrbare Trittplatte aufweist.

In diesem Zusammenhang muss aus Sicherheitsgründen während des Aus- und Einfahrens ein Betreten der Trittplatte sensiert werden, damit die Aus- bzw. Einfahrbewegung in diesem Fall gestoppt werden kann. Nach derzeitigen Vorschriften muss eine Mindestbelastung von 15 kg auf die Platte unabhängig von der Stellung der Trittplatte sen-siert werden.

Eine einfache Vorrichtung zum Erfassen einer senkrechten Belastung einer Trittstufe, wie sie beim Betreten einer Trittstufe auftritt, ist aus der EP 1 502 817 A1 bekannt. Die Trittstufe ist ähnlich ausgeführt wie ein Druckschalter, wird sie von oben belastet, so wird ein Schalter betätigt.

Eine Vorrichtung zum Erfassen einer senkrechten und/oder vertikalen Belastung einer Trittstufe mit zwei Wägezellen, der dem Oberbegriff des Anspruch 1 entspricht, ist aus der EP 1 470 959 A1 bekannt. Darin wird eine Belastung des Schiebetritts über zwei mit Dehnungsmessstreifen ausgestatteten Wägzellen sensiert. Eine horizontale Belastung wird dabei von einer anderen Wägezelle sensiert als eine senkrechte Belastung.

Es ist bekannt, eine verschwenkbar gelagerte Trittplatte an ihrem vorderen Ende auf zwei Rollenböcke aufzulegen. Die Rollenböcke sind mit Federelementen verbunden, welche sich auf einem nicht zusammen mit der Trittplatte bewegenden Rahmen abstützen. Wird die Trittplatte betreten, so senkt sich die Trittplatte gegen die Federkraft der Federelemente ab, d.h. die Federkraft stellt bezüglich der Kraft, welche im Wesentlichen senkrecht auf die Trittplatte wirkt, eine Gegenkraft dar. Sobald sich die Trittplatte um eine vorgegebene Strecke abgesenkt hat, wird dies von einem Schaltelement sensiert, und es wird ein Signal generiert, wodurch die Aus- bzw. Einfahrbewegung angehalten wird.

Dass die Belastung unabhängig von der Stellung der Trittplatte sensiert werden muss, ist problematisch, da sich die Kraftverhältnisse während der Aus- bzw. Einfahrbewegung auf Grund des Eigengewichts der Trittplatte sowie auf Grund der veränderten Hebelverhältnisse verändern. Die Kraft, welche auf Grund der äußeren Belastung auf die Rollenböcke und die Federelemente wirkt, ist folglich bei gleicher Belastung unterschiedlich groß.

Die Vorrichtung muss demnach über die entsprechenden Federelemente derart eingestellt werden, dass unmittelbar nach Beginn der Ausfahrbewegung die Mindestbelastung sensiert wird, da an diesem Punkt das Eigengewicht der Trittplatte sowie die Hebelverhältnisse die kleinste Wirkung haben. Bei ausgefahrener Trittplatte reicht allerdings eine deutlich kleinere Belastung aus, um die gleiche Kraft auf die Federelemente zu bringen. Als Folge werden auch deutlich kleinere Belastungen sensiert, bei denen die Bewegungen der Trittplatte eigentlich nicht angehalten werden müssen, d.h. es werden Fehlerfälle sensiert, die keine sind.

Aufgabe der Erfindung es, ist eine Vorrichtung zu schaffen, bei welcher die Sensierung einer Belastung in geringerem Maße von der Stetlung der Trittplatte abhängt.

Die Lösung der Aufgabe erfolgt erfindungsgemäß mit den Merkmalen aus dem kennzeichnenden Teil des Patentanspruchs 1.

Während des Ausfahrens der Trittplatte wird die von den Haupt-Federelementen bewirkte Gegenkraft erhöht und während des Einfahrens der Trittplatte wird die von den Haupt-Federelementen bewirkte Gegenkraft verringert. Dies kann dadurch erreicht werden, dass Neben-Federelemente während des Ausfahrens zugeschaltet bzw. während des Einfahrens abgeschaltet werden.

Vorteilhafterweise kann hierbei die Vorrichtung zumindest zwei an den Längsseiten der Trittplatte angeordnete Haupt-Federelemente aufweisen, welche jeweils über ein Rollenelement, insbesondere einen Rollenbock, derart mit der Trittplatte verbunden sind, dass die Trittplatte in der Ausfahrrichtung über die Rollen der Rollenböcke läuft.

Ferner kann an der Trittplatte zumindest ein Distanzelement angeordnet sein, welches eine vorgegebene Höhe aufweist und welches um eine vorgegebene Versatz-Strecke von der Vorderkante der Trittplatte zurückversetzt angeordnet ist.

Des Weiteren kann die Vorrichtung zumindest zwei an den Längsseiten der Trittplatte angeordnete Neben-Federelemente aufweisen, welche jeweils nach einer vorgegebenen Ausfahrstrecke über das Distanzelement und einen Rollenbock derart mit der Trittplatte verbunden sind, dass die Trittplatte in der Ausfahrrichtung über die Rollen der Rollenböcke läuft.

In einer besonders vorteilhaften Ausgestaltung kann jeder Rollenbock, welcher mit einem Neben-Federelement verbunden ist, mit jeweils einem Distanzelement zusammenwirken. Damit das Zusammenwirken von Distanzelement und Rolle verbessert wird, kann das Distanzelement an der vom Fahrzeug abgewandten Seite abgeschrägt sein.

Vorteilhafterweise kann als Schaltelement ein Induktivschalter verwendet werden.

In funktionsgteicher Weise kann erfindungsgemäß die Vorrichtung anstelle der Rollenelemente auch Gleitelemente aufweisen.

In einer besonders vorteilhaften Ausgestaltung können mehrere aufeinander abgestimmte Neben-Federelemente verwendet werden, so dass die Abhängigkeit vom Ausfahrweg noch in einem größerem Maße verringert wird.

Ein mögliches Ausführungsbeispiel der Erfindung ist in den Figuren 1 bis 15 dargestellt.

Es zeigen:
- Fig. 1: eine Trittvorrichtung in der Draufsicht mit eingefahrener Trittplatte
- Fig. 2: die Vorrichtung aus Figur 1 in einer Schnittansicht gemäß der Schnittlinie A-A in Figur 1
- Fig. 3: die Vorrichtung aus Figur 1 in einer Schnittansicht gemäß der Schnittlinie B-B in Figur 1
- Fig. 4: die Vorrichtung aus Figur 1 in der Draufsicht mit teilweise ausgefahrener Trittplatte
- Fig. 5: die Vorrichtung aus Figur 4 in einer Schnittansicht gemäß der Schnittlinie C-C in Figur 4
- Fig. 6: die Vorrichtung aus Figur 4 in einer Schnittansicht gemäß der Schnittlinie D-D in Figur 4
- Fig. 7: die Vorrichtung aus Figur 1 in der Draufsicht mit ausgefahrener Trittplatte
- Fig. 8: die Vorrichtung aus Figur 7 in einer Schnittansicht gemäß der Schnittlinie E-E in Figur 7
- Fig. 9: die Vorrichtung aus Figur 7 in einer Schnittansicht gemäß der Schnittlinie F-F in Figur 7
- Fig. 10: ein vergrößerter Ausschnitt aus Fig. 4 gemäß dem mit "U" beschrifteten Bereich
- Fig. 11: ein vergrößerter Ausschnitt aus Fig. 5 gemäß dem mit "V" beschrifteten Bereich
- Fig. 12: ein vergrößerter Ausschnitt aus Fig. 6 gemäß dem mit "W" beschrifteten Bereich
- Fig. 13: ein vergrößerter Ausschnitt aus Fig. 8 gemäß dem mit "Y" beschrifteten Bereich
- Fig. 14: ein vergrößerter Ausschnitt aus Fig. 9 gemäß dem mit "Z" beschrifteten Bereich
- Fig. 15: ein Diagramm der Auslösegewichte über dem Ausfahrweg

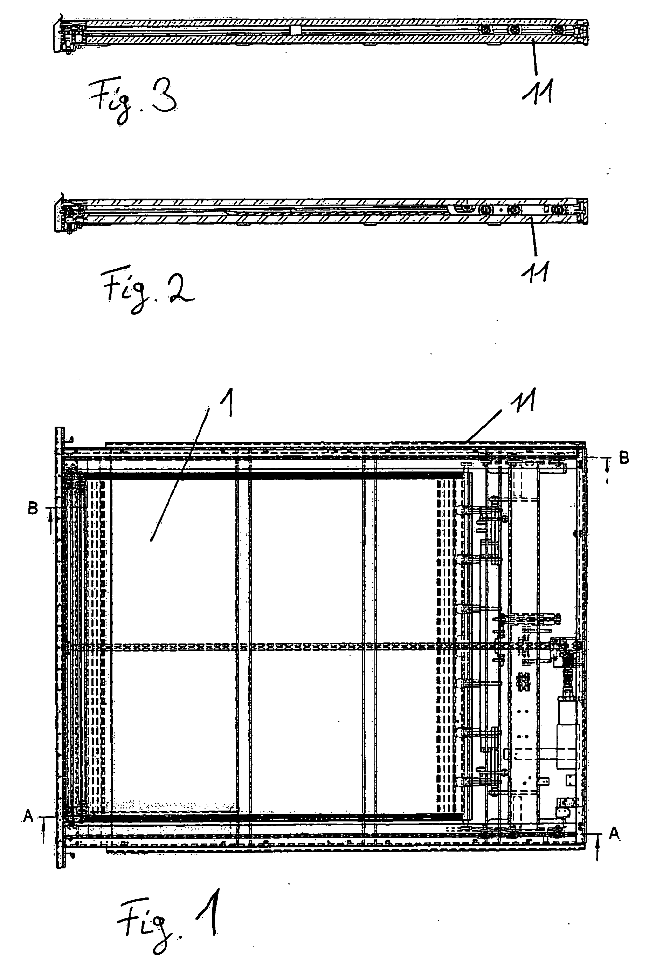

Fig. 1 zeigt eine Trittvorrichtung in der Draufsicht, welche an einem Bus des öffentlichen Personenverkehrs Einsatz findet. Dargestellt ist eine Trittplatte 1, welche in einem Rahmen 11 in Ausfahrrichtung verschiebbar gelagert ist.

Die Figuren 2 und 3 zeigen die Vorrichtung aus Figur 1 in einer Schnittansicht durch den Rahmen 11 gemäß der Schnittlinie A-A bzw. B-B in Figur 1.

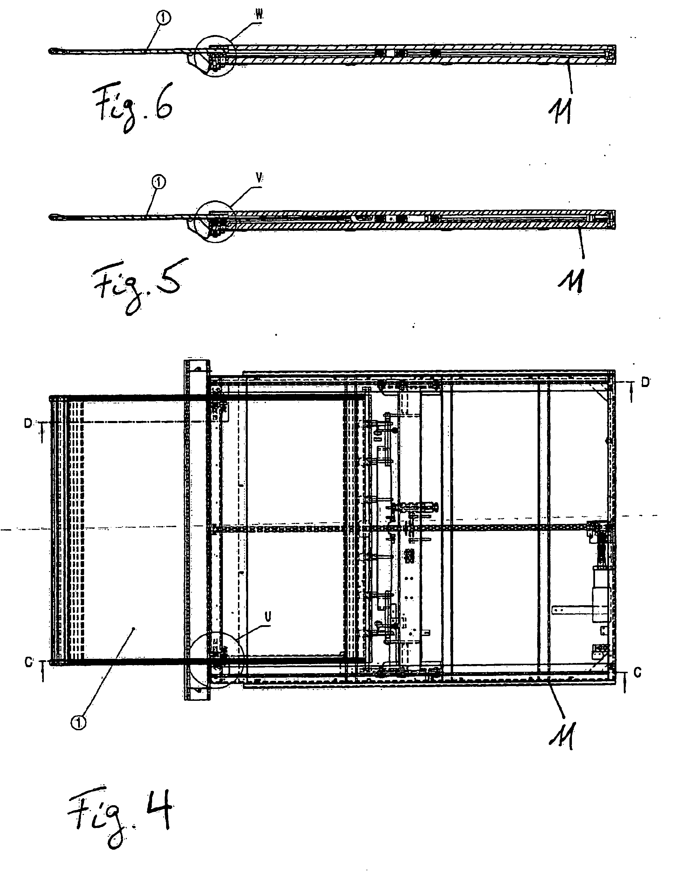

Fig. 4 zeigt die Trittvorrichtung mit der Trittplatte 1 und dem Rahmen 11 aus Fig. 1 in der Draufsicht mit teilweise ausgefahrener Trittplatte.

Die Figuren 5 und 6 zeigen die Vorrichtung aus Figur 4 in einer Schnittansicht durch den Rahmen 11 gemäß der Schnittlinie C-C bzw. D-D in Figur 4.

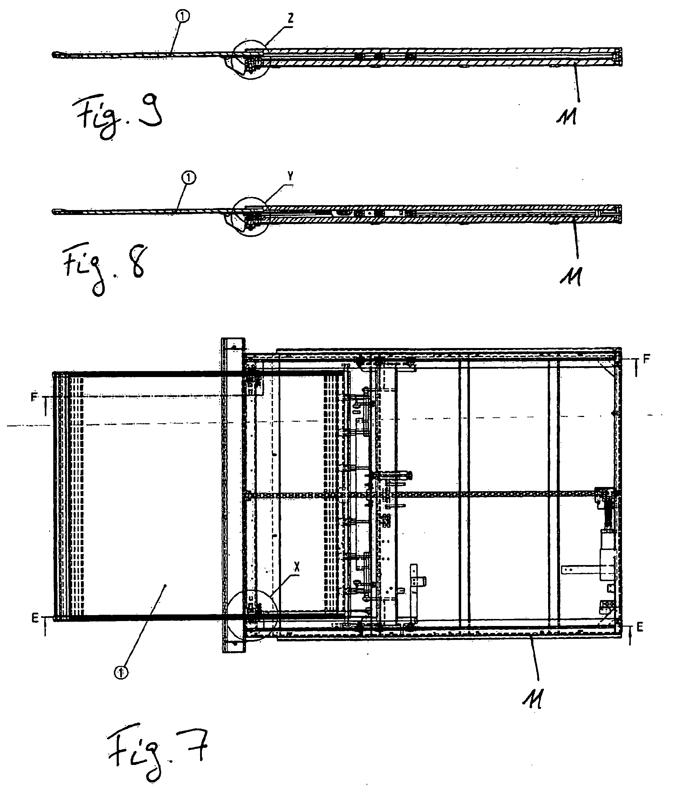

Fig. 7 zeigt die Trittvorrichtung mit der Trittplatte 1 und dem Rahmen 11 aus Fig. 1 in der Draufsicht mit ausgefahrener Trittplatte.

Die Figuren 8 und 9 zeigen die Vorrichtung aus Figur 7 in einer Schnittansicht durch den Rahmen 11 gemäß der Schnittlinie E-E bzw. F-F in Figur 7.

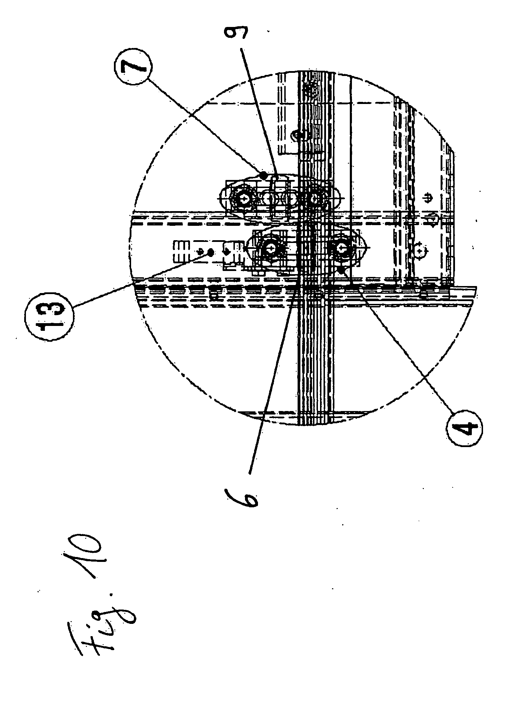

Fig. 10 zeigt einen vergrößerter Ausschnitt aus Fig. 4 gemäß dem mit "U" beschrifteten Bereich. Dargestellt ist die Trittplatte 1, welche sich über eine Rolle 6 eines Rollenbockes 4 an dem Rahmen abstützt. Dargestellt sind ferner ein weiterer Rollenbock 7 mit einer Rolle 9 sowie ein als Induktiv-Schalter ausgeführtes Schaltelement 13, dessen Funktion weiter unten beschrieben wird.

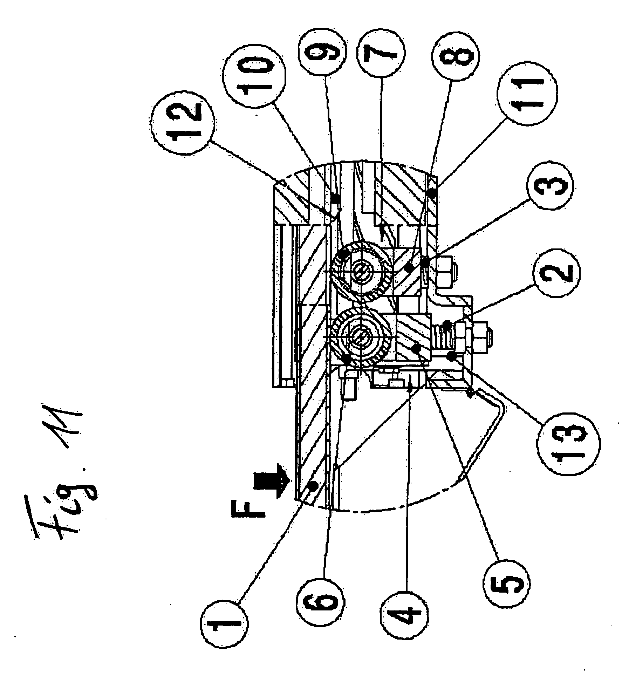

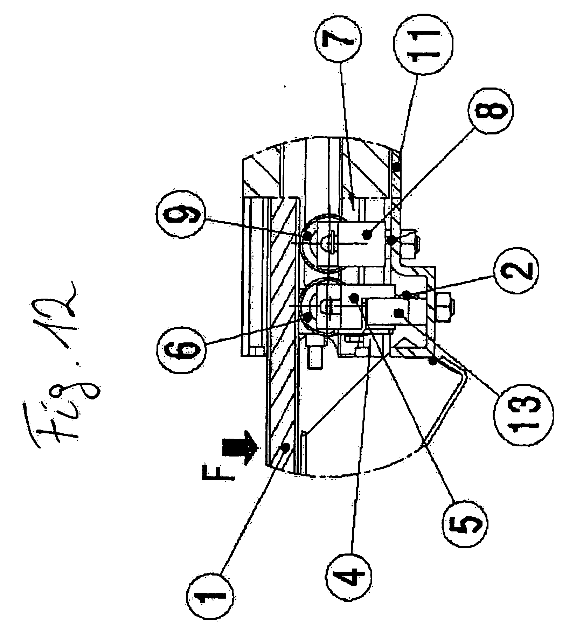

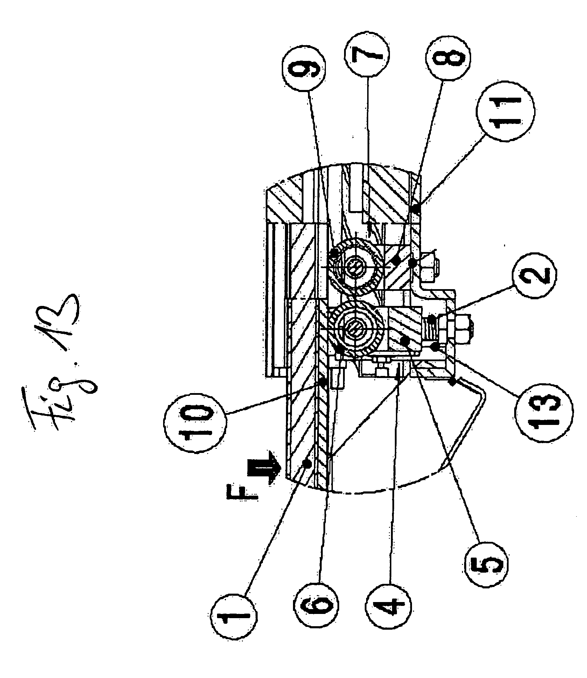

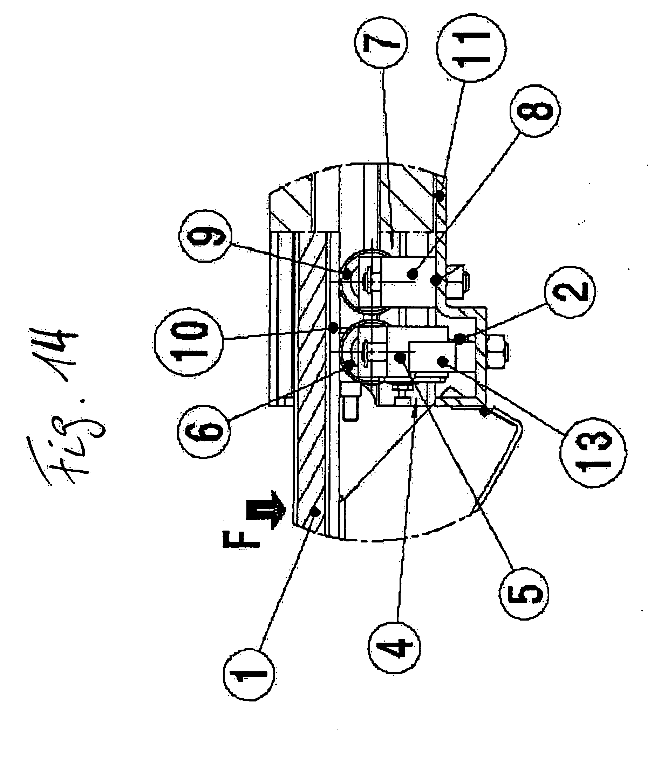

Die Figuren 11 bis 14 zeigen die Vorrichtung zur Trittsensierung im Detail, wobei Fig. 11 einen vergrößerten Ausschnitt aus Fig. 5 gemäß dem mit "V" beschrifteten Bereich, Fig. 12 einen vergrößerten Ausschnitt aus Fig. 6 gemäß dem mit "W" beschrifteten Bereich, Fig. 13 einen vergrößerten Ausschnitt aus Fig. 8 gemäß dem mit "Y" beschrifteten Bereich und Fig. 14 einen vergrößerten Ausschnitt aus Fig. 9 gemäß dem mit "Z" beschrifteten Bereich zeigt.

Die Figuren 11 bis 14 zeigen, dass sich unter der Trittplatte 1 das Haupt-Federelement 2 befindet, welches über das als Rollenbock 4 ausgeführte Rollenelement, bestehend aus einem Bock 5 und der Rolle 6, mit der Trittplatte verbunden ist. Das Haupt-Federelement 2 stützt sich am anderen Ende am Rahmen 11 ab.

Wird die Trittplatte 1 belastet, d.h. wirkt eine im Wesentlichen zur Trittplatte 1 senkrechte Kraft F auf die Trittplatte, so wird sie entgegen der Federkraft des Haupt-Federelementes 2 abgesenkt. Die Federkraft wirkt somit als Gegenkraft zur äußeren Kraft F. Ist die äußere Kraft F groß genug, d.h. wird die Trittplatte 1 um eine vorgegebene Strecke abgesenkt, so wird das Schaltelement 13 betätigt, welches in nicht dargestellter Weise ein Signal generiert, wodurch die Ausfahrbewegung der Trittplatte angehalten wird.

Unter der Trittplatte 1 ist ein Distanzelement 10 angeordnet, welches nach einer vorgegebenen Ausfahrstrecke der Trittplatte mit der Rolle 9 des als Rollenbock 7 ausgeführten Rollenelementes, bestehend aus der Rolle 9 und einem Bock 8, zusammenwirkt. Das Distanzelement 10 besitzt eine solche Länge, dass es für die gesamte weitere Ausfahrstrecke mit dem Rollenbock 7 zusammenwirkt. Der Rollenbock 7 ist mit einem Neben-Federelement 3 verbunden, welches sich an dem Rahmen 11 abstützt. Wird nunmehr die Trittlatte 1 belastet, so ist die Gegenkraft um die Federkraft des Neben-Federelementes 3 erhöht. Damit das Zusammenwirken von Distanzelement 10 und Rolle 9 verbessert wird, ist das Distanzelement 10 an der Seite 12 abgeschrägt.

Bei der Einfahrbewegung der Trittplatte 1 wirkt die Vorrichtung analog in umgekehrter Weise.

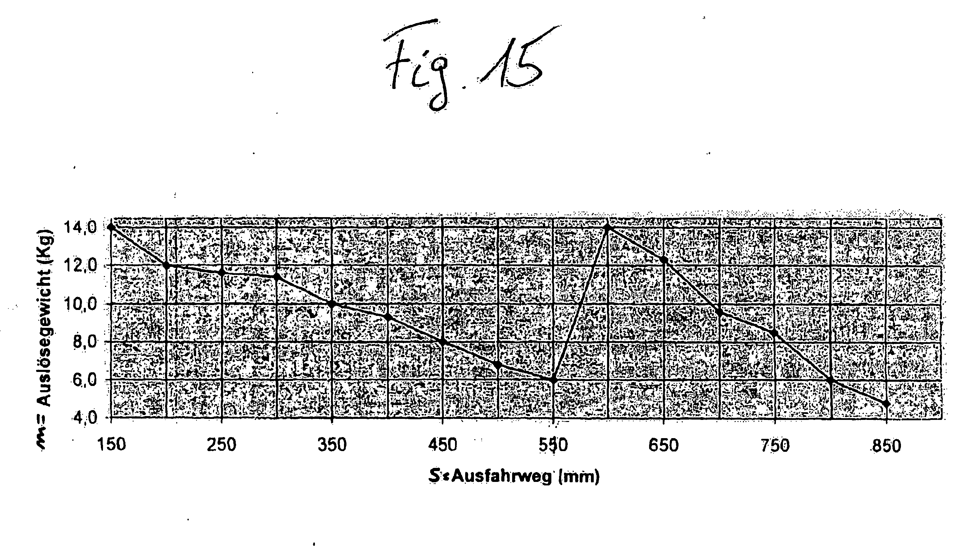

Die Fig. 15 zeigt ein Diagramm der Auslösegewichte m über dem Ausfahrweg s der Trittplatte 1. Die Vorrichtung ist derart ausgestaltet, dass ab einer Ausfahrstrecke von s = 600 mm das Distanzelement 10 mit dem Rollenbock 7 zusammenwirkt. Es ist erkennbar, dass bei einer geringen Ausfahrstrecke von s = 150 mm ein Gewicht von m = 14 kg ausreicht, damit die Bewegung der Trittplatte 1 angehalten wird. Fährt die Trittplatte 1 weiter aus, so sinkt das Auslösegewicht auf Grund des nun größeren Einflusses des Trittplattengewichts und der veränderten Hebelverhältnisse. Bei einer Ausfahrstrecke von s = 550 mm reicht bereits ein Gewicht von m = 6 kg aus, damit die Bewegung der Trittplatte 1 angehalten wird, also ein Gewicht, welches deutlich kleiner ist, als es erforderlich wäre. Bei der Ausfahrstrecke von s = 600 mm wirkt das Distanzelement 10 mit dem Rollenbock 7 zusammen, wodurch die Gegenkraft um die Federkraft des Neben-Federelementes 3 erhöht wird. Bei dieser Ausfahrstrecke ist wiederum ein Gewicht von m = 14 kg notwendig, damit die Bewegung der Trittplatte 1 angehalten wird. Bei einer größeren Ausfahrstrecke nimmt das Auslösegewicht wiederum ab.

In einer erweiterten, nicht dargestellten Ausführungsform kann durch Zuschaltung von weiteren Neben-Federelementen das absinkende Verhalten der Kurve verbessert werden und somit die Abhängigkeit des Auslösegewichtes vom Ausfahrweg noch in einem größerem Maße verringert werden.

## Patentansprüche

1. Vorrichtung zur Trittsensierung an einer Trittplatte (1) eines Fahrzeugs, insbesondere eines Fahrzeugs des öffentlichen Personenverkehrs,
• wobei die Trittplatte aus einer eingefahrenen Stellung in eine
• ausgefahrene Stellung bewegbar ist,
• welche zumindest ein Haupt-Federelement (2) mit einer vorgegebenen Federsteifigkeit und zumindest ein Schaltelement (13) aufweist,
• wobei das Haupt-Federelement (2) derart angeordnet ist, dass die Federkraft des Haupt-Federelementes (2) eine Gegenkraft darstellt, welche entgegen einer auf die Oberseite der Trittplatte (1) im Wesentlichen senkrecht zur Trittplatte (1) wirkenden Kraft wirkt,
• wobei das Schaltelement (13) sensiert, ob eine auf die Oberseite der Trittplatte (1) im Wesentlichen senkrecht zur Trittplatte wirkende Kraft um einen vorgegebenen Betrag größer als die Gegenkraft ist,
• wobei in diesem Fall ein Signal generiert wird, insbesondere ein
• Anhaltesignal für die Bewegung der Trittplatte, und
• wobei die Vorrichtung zumindest ein Neben-Federelement (3) aufweist, welches während des Ausfahrens der Trittplatte (1) die Gegenkraft erhöht und welches während des Einfahrens der Trittplatte (1) die Gegenkraft verringert,
**dadurch gekennzeichnet,**
• **dass** an der Trittplatte (1) zumindest ein Distanzelement (10) angeordnet ist, welches eine vorgegebene Höhe aufweist,
• und welches um eine vorgegebene Versatz-Strecke von der Vorderkante der Trittplatte (1) zurückversetzt angeordnet ist,
• und **dass** die Vorrichtung zumindest zwei an den Längsseiten der Trittplatte (1) angeordnete Neben-Federelemente (3) aufweist,
• welche jeweils nach einer vorgegebenen Ausfahrstrecke über das Distanzelement (10) und ein Rollenelement, derart mit der Trittplatte (1) verbunden sind, dass die Trittplatte (1) in der Ausfahrrichtung über die Rollen (9) der Rollenelemente läuft.

2. Vorrichtung nach Anspruch 1, **dadurch gekennzeichnet, dass** die Vorrichtung zumindest zwei an den Längsseiten der Trittplatte (1) angeordnete Haupt-Federelemente (2) aufweist, welche jeweils über ein Rollenelement, insbesondere einen Rollenbock (4), derart mit der Trittplatte (1) verbunden sind, dass die Trittplatte (1) in der Ausfahrrichtung über die Rollen (6) der Rollenelemente läuft.

3. Vorrichtung nach Anspruch 2, **dadurch gekennzeichnet, dass** die Rollen (9) der Rollenelemente, welche mit den Neben-Federelementen (3) verbunden sind, um die Höhe des Distanzelementes (10) gegenüber den Rollen (6) der Rollenelemente, welche mit den Haupt-Federelementen (2) verbunden sind, in einer zur Trittplatte (1) senkrechten Richtung versetzt angeordnet sind.

4. Vorrichtung nach Anspruch 2 oder 3, **dadurch gekennzeichnet, dass** jedes Rollenelement, welches mit einem Neben-Federelement (2) verbunden ist, mit jeweils einem Distanzelement (10) zusammenwirkt.

5. Vorrichtung nach einem oder mehreren der Ansprüche 2 bis 4, **dadurch gekennzeichnet, dass** das Distanzelement (10) an der vom Fahrzeug abgewandten Seite (12) abgeschrägt ist.

6. Vorrichtung nach einem oder mehreren der Ansprüche 2 bis 5, **dadurch gekennzeichnet, dass** das Schaltelement (13) als Induktivschalter ausgeführt ist

## Claims

1. An apparatus for sensing stepping on a step plate (1) of a vehicle, more specifically of a vehicle for public transport users,
• said step plate being movable from a retracted position to a deployed position,
• comprising at least one main spring element (2) with a given spring stiffness and at least one switch element (13),
• said main spring element (2) being disposed for the force of the main spring element (2) to constitute a counterforce which acts against a force acting on the upper side of said step plate (1), substantially at right angles to said step plate (1),
• said switch element (13) sensing whether a force acting on the upper side of said step plate (1), substantially at right angles to said step plate is greater, by a given amount, than the counterforce,
• a signal being generated in this case, more specifically a
• a signal for stopping the movement of the step plate and
• said apparatus comprising at least one auxiliary spring element (3) for increasing the counterforce whilst the step plate (1) is being deployed and for reducing the counterforce whilst the step plate (1) is being retracted,
**characterized in that**
• at least one spacer element (10) with a given height is disposed on said step plate (1),
• said spacer element being set back a given distance from the front edge of said step plate (1),
• and that the apparatus comprises at least two auxiliary spring elements (3) disposed on the long sides of said step plate (1),
• said spring auxiliary elements being each connected, via said spacer element (10) and a roller element, to said step plate (1) in such way that the step plate (1) after having been deployed a given distance runs over the rollers (9) of the roller elements in the direction of deployment.

2. The apparatus as set forth in claim 1, **characterized in that** said apparatus comprises at least two main spring elements (2) that are disposed on the long sides of said step plate (1) and are connected each, via a roller element, more specifically via a roller block (4), to said step plate (1) for said step plate (1) to run over the rollers (6) of the roller elements in the direction of deployment.

3. The apparatus as set forth in claim 2, **characterized in that** the rollers (9) of the roller elements, which are connected to the auxiliary spring elements (3), are offset with respect to the rollers (6) of the roller elements connected to the main spring elements (2) by the height of the spacer element (10) in a direction perpendicular to said step plate (1).

4. The apparatus as set forth in claim 2 or 3, **characterized in that** each roller element, which is connected to an auxiliary spring element (2) cooperates with a respective spacer element (10).

5. The apparatus as set forth in any one or several of the claims 2 through 4, **characterized in that** the spacer element (10) is beveled on the side (12) turned away from the vehicle.

6. The apparatus as set forth in any one or several of the claims 2 through 5, **characterized in that** the switch element (13) is configured to be an inductive switch.

## Revendications

1. Dispositif pour capter lorsque l'on marche sur un marche-pied (1) d'un véhicule, notamment d'un véhicule de transport public,
• le marche-pied étant mobile entre une position escamotée et une position déployée,
• du type comportant au moins un élément ressort principal (2) avec une raideur de ressort donnée et au moins un élément de commutation (13),
• l'élément ressort principal (2) étant disposé de telle sorte que l'action de l'élément ressort principal (2) constitue une force antagoniste agissant à l'encontre d'une force agissant sur la face supérieure du marche-pied (1), sensiblement perpendiculairement au marche-pied (1),
• l'élément de commutation (13) captant si une force agissant sur la face supérieure du marche-pied (1), sensiblement perpendiculairement au marche-pied (1), est supérieure d'un montant donné à la force antagoniste,
• un signal étant généré dans ce cas, notamment un
• signal d'arrêt du mouvement du marche-pied, et
• le dispositif comportant au moins un élément ressort auxiliaire (3) qui augmente la force antagoniste pendant le déploiement du marche-pied (1) et qui diminue la force antagoniste pendant l'escamotage du marche-pied (1),
**caractérisé en ce**
• **qu'**au moins un élément d'écartement (10) d'une hauteur donnée est disposé sur le marche-pied (1),
• cet élément d'écartement étant décalé d'une distance donnée vers l'arrière par rapport au bord avant du marche-pied (1),
• et **que** le dispositif comporte au moins deux éléments ressort auxiliaires (3) disposés sur les longs côtés du marche-pied (1),
• ces éléments ressort auxiliaires étant, après une distance de déploiement donnée, chacun reliés de telle sorte au marche-pied (1) par l'intermédiaire de l'élément d'écartement (10) et d'un élément rouleau que le marche-pied (1) se déplace sur les rouleaux (9) des éléments rouleaux suivant la direction de déploiement.

2. Dispositif selon la revendication 1, **caractérisé en ce que** le dispositif comporte au moins deux éléments ressort principaux (2) disposés sur les longs côtés du marche-pied (1), ces éléments ressort principaux étant reliés chacun par l'intermédiaire d'un élément rouleau, notamment d'un support à rouleaux (4), au marche-pied (1) de telle sorte que le marche-pied (1) se déplace sur les rouleaux (6) des éléments rouleaux suivant la direction de déploiement.

3. Dispositif selon la revendication 2, **caractérisé en ce que** les rouleaux (9) des éléments rouleaux reliés aux éléments ressort auxiliaires (3) sont décalés de la hauteur de l'élément d'écartement (10) par rapport aux rouleaux (6) des éléments rouleaux reliés aux éléments ressort principaux (2) dans une direction perpendiculaire au marche-pied (1).

4. Dispositif selon la revendication 2 ou 3, **caractérisé en ce que** chaque élément rouleau relié à un élément ressort auxiliaire (2) coopère avec un élément d'écartement (10) respectif.

5. Dispositif selon une ou plusieurs des revendications 2 à 4, **caractérisé en ce que** l'élément d'écartement (10) est biseauté sur le côté (12) détourné du véhicule.

6. Dispositif selon une ou plusieurs des revendications 2 à 5, **caractérisé en ce que** l'élément de commutation (13) est réalisé sous forme de commutateur inductif.
